# EUROPEAN PATENT APPLICATION

(11) **EP 2 639 946 A2**
(43) Date of publication of application: **18.09.2013**
(21) Application number: 12174731.5
(22) Date of filing: 03.07.2012
(51) Int. Cl.: H02K 11/00, H02K 5/22, H02K 9/19

(54) **Motor driving device**

(30) Priority: 14.03.2012 JP 2012057012
(71) Applicant: Kabushiki Kaisha Yaskawa Denki, Kitakyushu-Shi Fukuoka 806 (JP)
(72) Inventor: Soma, Akira, Kitakyushu-shi, Fukuoka 806-0004 (JP); Hara, Hidenori, Kitakyushu-shi, Fukuoka 806-0004 (JP); Takatsuka, Yushi, Kitakyushu-shi, Fukuoka 806-0004 (JP)
(74) Representative: Viering, Jentschura & Partner

(57) **Abstract**

This motor driving device (10) includes a motor (3) including a high speed drive coil (3a) and a low speed drive coil (3b), a coil switching portion (4) arranged in a direction along a rotating shaft (31) of the motor with respect to the motor, a power converter (1) arranged in a direction intersecting with the rotating shaft with respect to the motor, and a plurality of case portions (11, 12, 16) storing at least the motor, the coil switching portion, and the power converter. The plurality of case portions are coupled with each other.

## Description

### BACKGROUND OF THE INVENTION

### Field of the Invention

The present invention relates to a motor driving device.

### Description of the Background Art

A motor driving device including a motor having a high speed drive coil and a low speed drive coil is known in general. Japanese Patent Laying-Open No. 2010-017055 discloses a motor driving device including a motor having a high speed drive coil and a low speed drive coil, a coil switching portion switching the connection states of the two coils of the motor, and an inverter (power converter) connected to the motor.

In the conventional motor driving device including the motor, the coil switching portion, and the power converter disclosed in the aforementioned Japanese Patent Laying-Open No. 2010-017055, the motor, the coil switching portion, and the power converter are generally stored in separate case portions and placed separately.

However, in the aforementioned conventional motor driving device, the motor, the coil switching portion, and the power converter are stored in the separate case portions and placed separately, so that a dead space may be formed between each of the case portions storing the motor, the coil switching portion, and the power converter. In this case, it is difficult to save space.

### SUMMARY OF THE INVENTION

The present invention has been proposed in order to solve the aforementioned problem, and an object of the present invention is to provide a motor driving device capable of saving space.

A motor driving device according to an aspect includes a motor including a high speed drive coil and a low speed drive coil, a coil switching portion switching connection states of the high speed drive coil and the low speed drive coil of the motor, arranged in a direction along a rotating shaft of the motor with respect to the motor, a power converter connected to the motor, arranged in a direction intersecting with the rotating shaft with respect to the motor, and a plurality of case portions storing at least the motor, the coil switching portion, and the power converter, while the plurality of case portions are coupled with each other.

In the motor driving device according to the aspect, as hereinabove described, the plurality of case portions storing at least the motor, the coil switching portion, and the power converter are provided, and coupled with each other. Thus, the plurality of case portions storing the motor, the coil switching portion, and the power converter can be coupled with each other to be integrated, and hence formation of a dead space between each case portion storing the motor, the coil switching portion, and the power converter can be suppressed. Furthermore, the coil switching portion is arranged in the direction along the rotating shaft with respect to the motor while the power converter is arranged in the direction intersecting with the rotating shaft with respect to the motor, whereby the length of the motor driving device in the direction along the rotating shaft can be reduced as compared with a case where the motor, the coil switching portion, and the power converter are linearly arranged in the direction along the rotating shaft of the motor. Consequently, space can be saved.

According to the aforementioned motor driving device, space can be saved.)

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the schematic structure of a vehicle according to an embodiment;
Fig. 2 is a perspective view showing the overall structure of a motor driving portion according to the embodiment;
Fig. 3 is an exploded perspective view of the motor driving portion shown in Fig. 2;
Fig. 4 is a perspective view for illustrating a cooling tube provided in a first case portion of the motor driving portion according to the embodiment;
Fig. 5 is a perspective view of the motor driving portion shown in Fig. 2 as viewed along arrow Y1;
Fig. 6 is a perspective view showing a coil switching portion mounted on a second case portion of the motor driving portion according to the embodiment;
Fig. 7 is a diagram of the coil switching portion shown in Fig. 6 as viewed along arrow Y2;
Fig. 8 is a diagram of the motor driving portion shown in Fig. 2, from which the second case portion and the coil switching portion are removed, as viewed along arrow Y2; and
Fig. 9 is a diagram for illustrating a connection relation between a motor and an inverter and a connection relation between the motor and the coil switching portion in the first case portion and the second case portion of the motor driving portion according to the embodiment.

### DESCRIPTION OF THE EMBODIMENTS

An embodiment is now described with reference to the drawings.

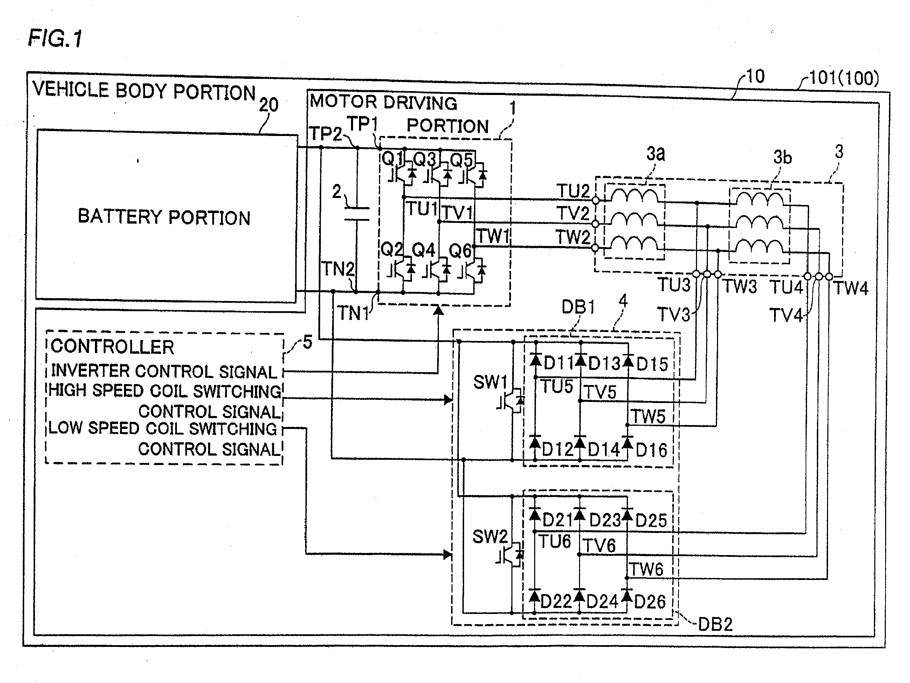

First, the schematic structure of a vehicle 100 and a motor driving portion 10 according to this embodiment is described with reference to Fig. 1.

As shown in Fig. 1, the vehicle 100 includes a vehicle body portion 101, the motor driving portion 10 provided inside the vehicle body portion 101, and a battery portion 20 connected to the motor driving portion 10. The motor driving portion 10 is an example of the "motor driving device".

The motor driving portion 10 includes an inverter 1, a smoothing condenser 2, a motor 3, a coil switching portion 4, and a controller 5. The inverter 1 is an example of the "power converter".

The inverter 1 is configured to convert DC power input from the battery portion 20 into three-phase (U-phase, V-phase, and W-phase) AC power to output the AC power to the motor 3. The inverter 1 has DC input terminals TP1 and TN1 connected to the battery portion 20 and AC output terminals TU1, TV1, and TW1 connected to the motor 3. The DC input terminals TP1 and TN1 of the inverter 1 are connected with terminals TP2 and TN2 of the smoothing condenser 2, respectively. This smoothing condenser 2 is provided to smooth the DC power input to the inverter 1 from the battery portion 20. In other words, the smoothing condenser 2 is configured to reduce pulsation due to the load of voltage output from the battery portion 20.

Furthermore, the inverter 1 includes six switching elements Q1, Q2, Q3, Q4, Q5, and Q6 for power conversion. The switching elements Q1 and Q2 are configured to perform U-phase power conversion. The switching elements Q3 and Q4 are configured to perform V-phase power conversion. The switching elements Q5 and Q6 are configured to perform W-phase power conversion. The switching elements Q1 to Q6 each are made of a SiC (silicon carbide) semiconductor.

The motor 3 is configured to be driven on the basis of three-phase AC power supplied from the inverter 1. The motor 3 includes a three-phase coil 3a for high speed drive and a three-phase coil 3b for low speed drive. The coils 3a and 3b are examples of the "high speed drive coil" and the "low speed drive coil", respectively.

The coils 3a and 3b are electrically connected in series. Terminals TU2, TV2, and TW2 of three phases (U-phase, V-phase, and W-phase) on a first side of the coil 3a are connected to the inverter 1. Terminals TU3, TV3, and TW3 of three phases on a second side of the coil 3a and a first side of the coil 3b are connected to a diode bridge DB1 of the coil switching portion 4 described later. Terminals TU4, TV4, and TW4 on a second side of the coil 3b are connected to a diode bridge DB2 of the coil switching portion 4 described later.

The coil switching portion 4 has a function of switching the connection states of the coils 3a and 3b of the motor 3. Specifically, the coil switching portion 4 includes a high speed coil switch SW1 to short the terminals TU3, TV3, and TW3 of the motor 3 and a low speed coil switch SW2 to short the terminals TU4, TV4, and TW4 of the motor 3. The high speed coil switch SW1 and the low speed coil switch SW2 are examples of the "switching elements". The high speed coil switch SW1 and the low speed coil switch SW2 each are made of a SiC semiconductor.

The coil switching portion 4 includes the diode bridge DB1 connected to the high speed coil switch SW1 and the diode bridge DB2 connected to the low speed coil switch SW2. The diode bridge DB1 has terminals TU5, TV5, and TW5 connected to the terminals TU3, TV3, and TW3 of the motor 3, respectively. The diode bridge DB2 has terminals TU6, TV6, and TW6 connected to the terminals TU4, TV4, and TW4 of the motor 3, respectively.

The diode bridge DB1 is constituted by six diodes D11, D12, D13, D14, D15, and D16 to rectify three-phase (U-phase, V-phase, and W-phase) alternating current output from the terminals TU3, TV3, and TW3 of the motor 3. The diodes D11 and D12 are configured to rectify U-phase alternating current. The diodes D13 and D14 are configured to rectify V-phase alternating current. The diodes D15 and D16 are configured to rectify W-phase alternating current.

The diode bridge DB2 is constituted by six diodes D21, D22, D23, D24, D25, and D26 to rectify three-phase (U-phase, V-phase, and W-phase) alternating current output from the terminals TU4, TV4, and TW4 of the motor 3. The diodes D21 and D22 are configured to rectify U-phase alternating current. The diodes D23 and D24 are configured to rectify V-phase alternating current. The diodes D25 and D26 are configured to rectify W-phase alternating current.

The controller 5 is connected to an unshown controller of the entire vehicle 100 provided outside the motor driving portion 10. The controller 5 is configured to output control signals (an inverter control signal, a high speed coil switching control signal, and a low speed coil switching control signal) to the inverter 1 and the coil switching portion 4. Thus, the controller 5 controls switching of the switching elements Q1 to Q6 of the inverter 1, and controls switching of the high speed coil switch SW1 and the low speed coil switch SW2 of the coil switching portion 4. Although not shown in Fig. 1, the inverter 1, the coil switching portion 4, and the controller 5 each include a power supply circuit.

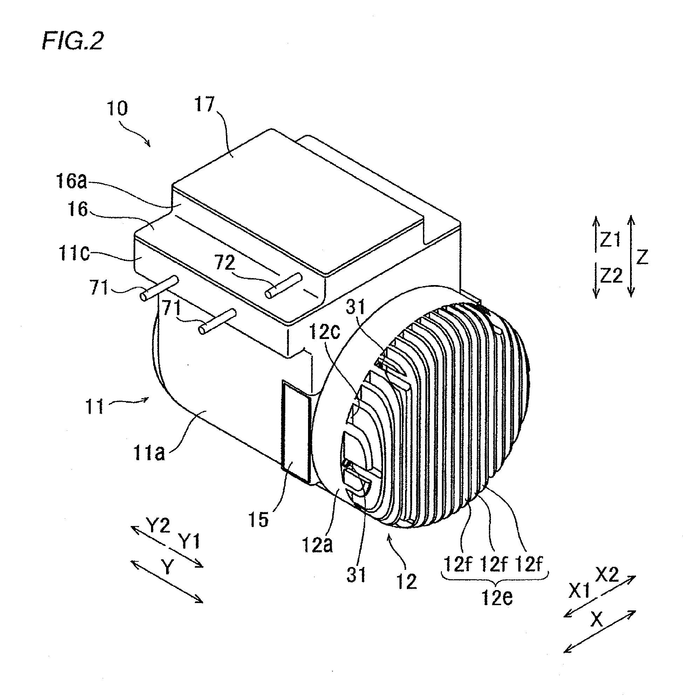

Next, the specific structure of the motor driving portion 10 according to this embodiment is described with reference to Figs. 2 to 9.

As shown in Figs. 2 to 9, the motor driving portion 10 includes a first case portion 11 storing the inverter 1, the smoothing condenser 2, the motor 3, and the controller 5 and a second case portion 12 storing the coil switching portion 4. The first case portion 11 and the second case portion 12 are examples of the "case portions". The first case portion 11 and the second case portion 12 are made of metal (cast metal) such as aluminum.

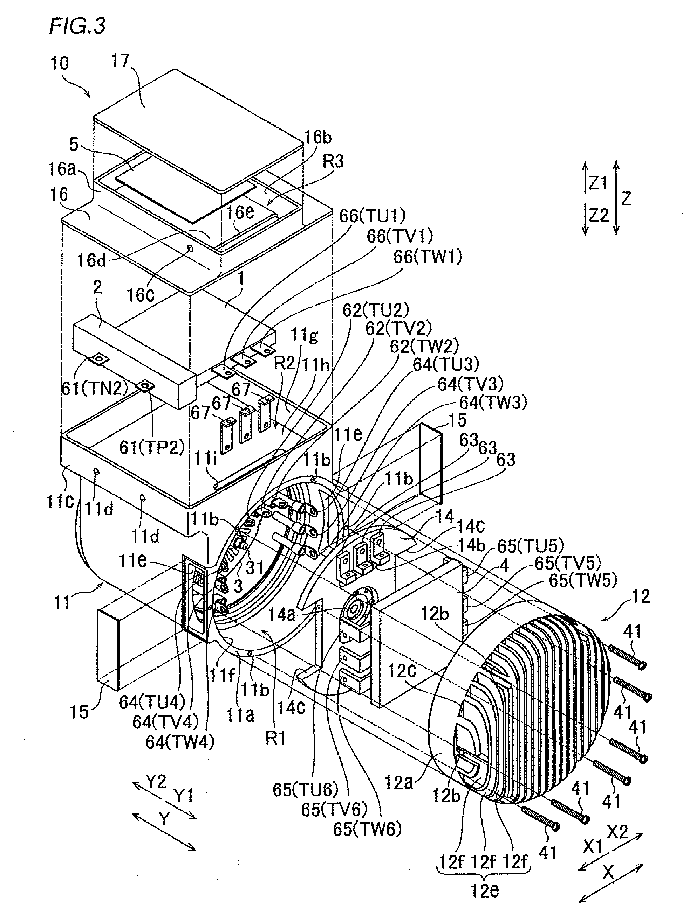

As shown in Fig. 3, the first case portion 11 and the second case portion 12 include a portion 11a in the form of a circular cylinder and a portion 12a in the form of a circular cylinder each extending along the extensional direction (axial direction: direction Y) of a rotating shaft 31 of the motor 3. The portion 11a in the form of a circular cylinder of the first case portion 11 is an example of the "cylindrical portion".

In this embodiment, the first case portion 11 and the second case portion 12 are fastened to each other along the axial direction (direction Y) with screw members 41 to be coupled with each other, as shown in Fig. 3. A plurality of (six) screw holes 11b engaged with the screw members 41 are provided in the portion 11a in the form of a circular cylinder of the first case portion 11 along the rotational direction of the motor 3. These screw holes 11b are formed to extend along arrow Y2 from the end surface of the first case portion 11 along arrow Y1. As shown in Figs. 3, 6, and 7, a plurality of (six) screw receiving holes 12b corresponding to the screw holes 11b of the first case portion 11 are provided in the portion 12a in the form of a circular cylinder of the second case portion 12 along the rotational direction of the motor 3. These screw receiving holes 12b are formed to pass through the portion 12a in the form of a circular cylinder of the second case portion in the direction Y. A portion where the first case portion 11 and the second case portion 12 are coupled with each other (portion between the first case portion 11 and the second case portion 12) is sealed with an unshown sealing member having a waterproof function.

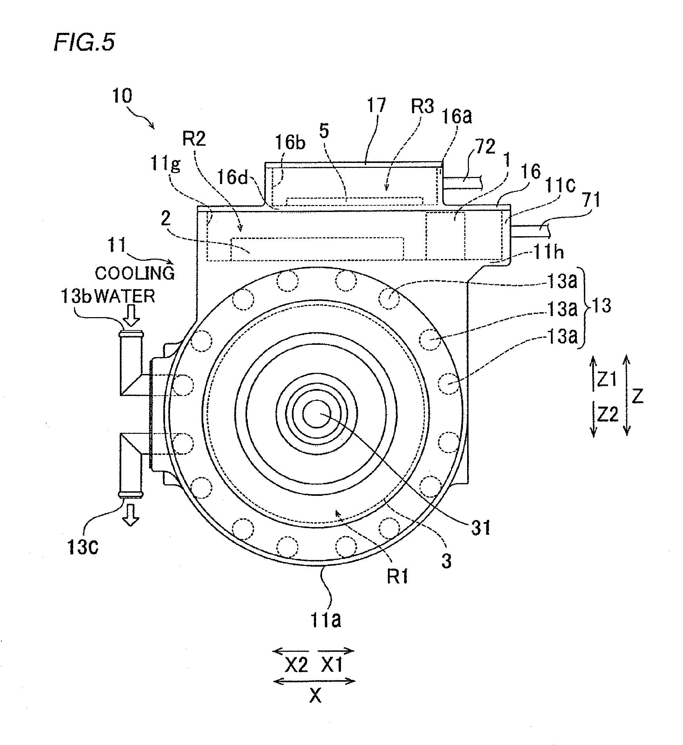

As shown in Figs. 3 and 5, the motor 3 is arranged in a first region R1 that is a space surrounded by the inner surface of the portion 11a in the form of a circular cylinder. The inverter 1 is arranged in a recessed second region R2 surrounded by a rectangular wall portion 11c formed to protrude upward (along arrow Z1) from the outer surface of the portion 11a in the form of a circular cylinder. As shown in Fig. 5, the first region R1 is arranged in the central portion of the first case portion 11. The second region R2 is arranged in a direction (along arrow Z1) orthogonal to the rotating shaft 31 of the motor 3 with respect to the first region R1. Thus, the inverter 1 arranged in the second region R2 is arranged in the direction (along arrow Z1) orthogonal to the rotating shaft 31 of the motor 3 with respect to the motor 3 arranged in the first region R1.

As shown in Figs. 3 and 5, the smoothing condenser 2 is arranged adjacent to the inverter 1 in the second region R2 where the inverter 1 is arranged. As shown in Fig. 3, two through-holes lid are provided in a portion along arrow X1, of the wall portion 11c surrounding the second region R2 to allow two connecting wires 71 for electrically connecting connecting terminal portions 61 (connecting terminals corresponding to the aforementioned terminals TP2 and TN2 shown in Fig. 1) of the smoothing condenser 2 and the battery portion 20 (see Fig. 1) provided outside the motor driving portion 10 to each other to pass through the wall portion 11c.

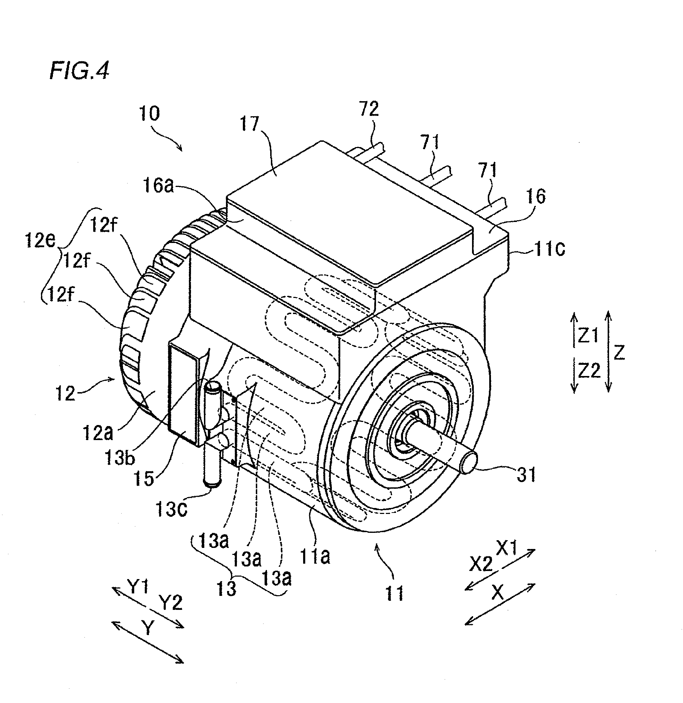

As shown in Figs. 4 and 5, a single water-cooling-type cooling tube 13 to cool the inverter 1 and the motor 3 is provided inside the portion 11a in the form of a circular cylinder of the case portion 11. In this embodiment, as shown in Fig. 5, the cooling tube 13 is arranged to be held between the motor 3 and the inverter 1. Thus, the inverter 1 and the motor 3 are water-cooled by the same cooling channel (cooling channel constituted by the single cooling tube 13). The first case portion 11 and the cooling tube 13 inside the first case portion 11 are formed by sand mold casting, for example. The cooling tube 13 is an example of the "first cooling portion".

As shown in Figs. 4 and 5, the cooling tube 13 is provided to circumferentially surround the motor 3 arranged in the first region R1 on the inner surface side of the portion 11a in the form of a circular cylinder. Specifically, the cooling tube 13 is so configured that a plurality of linear portions 13a (see Fig. 4) extending in the axial direction (direction Y) are arranged at substantially equal intervals along the rotational direction of the motor 3 inside the portion 11a in the form of a circular cylinder, as shown in Fig. 5. As shown in Fig- 4, the plurality of linear portions 13a extending in the axial direction, of the cooling tube 13 are bent in the form of a U to be connected to each other on both ends thereof in the axial direction. Thus, the cooling tube 13 constitutes a line of the cooling channel from a first end 13b protruding from the outer surface of the portion 11a in the form of a circular cylinder along arrow X2 to a second end 13c protruding from the outer surface of the portion 11a in the form of a circular cylinder along arrow X2, in which cooling water flows.

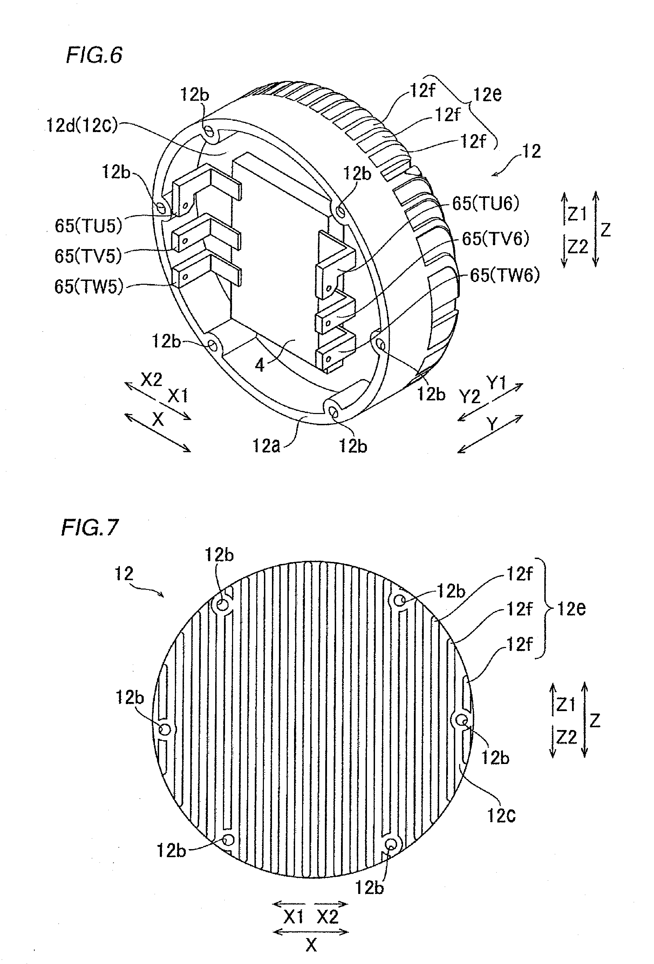

As shown in Figs. 2, 3, 6, and 7, a portion 12c in the form of a circular flat plate extending in directions (a horizontal direction (direction X) and a vertical direction (direction Z)) orthogonal to the rotating shaft 31 of the motor 3 is provided on an end along arrow Y1, of the portion 12a in the form of a circular cylinder of the second case portion 12. This portion 12c in the form of a flat plate is integrally formed on the portion 12a in the form of a circular cylinder. In this embodiment, the coil switching portion 4 is mounted on the surface of the portion 12c in the form of a flat plate closer to the first case portion 11 (along arrow Y2) in a state in surface contact with the surface of the portion 12c in the form of a flat plate through an unshown thermally-conductive member such as grease having thermal conductivity, as shown in Fig. 6. The surface of the portion 12c in the form of a flat plate on which the coil switching portion 4 is mounted, closer to the first case portion 11 (along arrow.Y2) is hereinafter referred to as a mounting surface 12d.

In this embodiment, an air-cooling-type cooling fin (heat radiation fin) 12e to cool the coil switching portion 4 is provided on the outer surface of the second case portion 12 opposite to the mounting surface 12d of the portion 12c in the form of a flat plate on which the coil switching portion 4 is mounted (along arrow Y1), as shown in Figs. 2, 3, 6, and 7. This cooling fin 12e is configured by providing a plurality of platelike members 12f extending in the vertical direction (direction Z) while being upright in a direction (axial direction (direction Y)) perpendicular to the portion 12c in the form of a flat plate at substantially equal intervals in the horizontal direction (direction X). Thus, the plurality of platelike members 12f of the cooling fin 12e come into contact with outside air, whereby the coil switching portion 4 is air-cooled. Specifically, heat generated from the coil switching portion 4 is transferred to the portion 12c in the form of a flat plate through the unshown thermally-conductive member and the mounting surface 12d, and thereafter radiated to the opposite side (along arrow Y1) of the mounting surface 12d of the portion 12c in the form of a flat plate through the plurality of platelike members 12f of the cooling fin 12e. The cooling fin 12e is an example of the "second cooling portion". The cooling fin 12e is integrally formed on the outer surface of the second case portion 12 opposite to the mounting surface 12d of the portion 12c in the form of a flat plate (along arrow Y1).

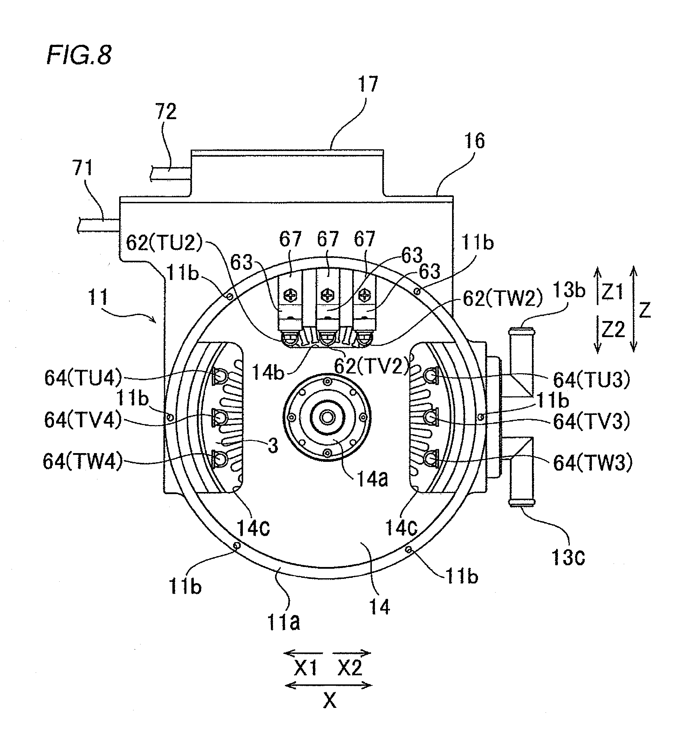

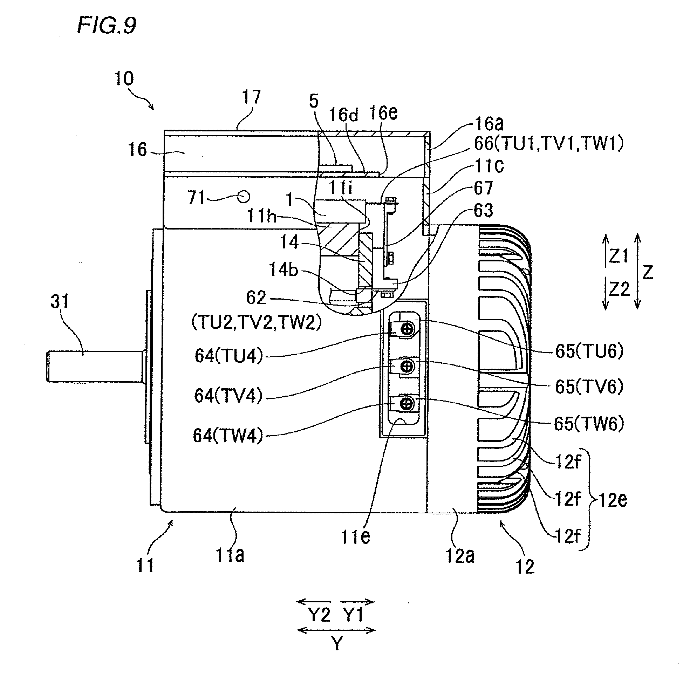

In this embodiment, a substantially disk-shaped partition wall 14 extending in the directions (the horizontal direction (direction X) and the vertical direction (direction Z)) orthogonal to the rotating shaft 31 of the motor 3 is arranged between the second case portion 12 and the motor 3 arranged in the first region R1 of the first case portion 11, as shown in Fig. 3. A bearing 14a connected to the rotating shaft 31 is provided on the central portion of this partition wall 14. As shown in Figs. 3, and 8, a single hole 14b is provided in the vicinity of the central portion of the partition wall 14 in the horizontal direction (direction X) and an upper portion (along arrow Z1) of the partition wall 14 to allow three connecting terminal portions 62 (connecting terminals corresponding to the aforementioned terminals TU2, TV2, and TW2 shown in Fig. 1) of the motor 3 to pass through the partition wall 14. As shown in Fig. 9, the three connecting terminal portions 62 of the motor 3 passing through the hole 14b of the partition wall 14 are screwed on L-shaped three connecting terminal portions 63, described later, mounted on the surface of the partition wall 14 opposite to the motor 3 (along arrow Y1).

As shown in Figs. 3 and 8, a pair of concaves 14c are provided in the vicinity of the central portion of the partition wall 14 in the vertical direction (direction Z) and both ends of the partition wall 14 in the horizontal direction (direction X) to allow six connecting terminal portions 64 and six connecting terminal portions 65 for electrically connecting the motor 3 and the coil switching portion 4 to each other to pass through the partition wall 14. The connecting terminal portions 64 are connecting terminals corresponding to the aforementioned terminals TU3, TV3, TW3, TU4, TV4, and TW4 of the motor 3 shown in Fig. 1. The connecting terminal portions 65 are connecting terminals corresponding to the aforementioned terminals TU5, TV5, TM5, TU6, TV6, and TW6 of the coil switching portion 4 shown in Fig. 1. As shown in Fig. 9, the six connecting terminal portions 64 of the motor 3 passing through the concaves 14c of the partition wall 14 and the six connecting terminal portions 65 of the coil switching portion 4 passing through the concaves 14c of the partition wall 14 are screwed to each other to be electrically connected to each other. As shown in Fig. 3, the motor 3 and the coil switching portion 4 are arranged to be opposed to each other on sides provided with the connecting terminal portions 64 and 65.

As shown in Figs. 3, 8, and 9, the three L-shaped three connecting terminal portions 63 are mounted on a portion in the vicinity of the aforementioned hole 14b, of the surface of the partition wall 14 opposite to the motor 3 (along arrow Y1). Although not shown in Figs. 3, 8, and 9, the three connecting terminal portions 63 each are mounted on the surface of the partition wall 14 closer to the second case portion 12 (along arrow Y1) through an insulating member made of resin or the like. As shown in Figs. 8 and 9, the three connecting terminal portions 63 are screwed on the three connecting terminal portions 62 of the motor 3 and L-shaped three connecting terminal portions 67 screwed on three connecting terminal portions 66 (connecting terminals corresponding to the aforementioned terminals TU1, TV1, and TW1 shown in Fig. 1) of the inverter 1.

In this embodiment, a pair of first openings 11e having a rectangular shape are provided in portions of the portion 11a in the form of a circular cylinder of the first case portion 11 closer to the second case portion 12 (along arrow Y1) on both sides in the horizontal direction (direction X), as shown in Figs. 3 and 9. As shown in Fig. 9, the pair of first openings 11e are arranged in positions corresponding to portions where the connecting terminal portions 64 of the motor 3 and the connecting terminal portions 65 of the coil switching portion 4 are screwed to each other. Thus, the operation of screwing the connecting terminal portions 64 of the motor 3 and the connecting terminal portions 65 of the coil switching portion 4 to each other can be externally performed through the first openings 11e when the first case portion 11 and the second case portion 12 are coupled with each other. As shown in Figs. 2 to 4, the pair of first openings 11e are covered with a pair of platelike first lids 15 having shapes (rectangular shapes) corresponding to the first openings 11e. The first lids 15 are attached to portions of the first case portion 11 corresponding to the first openings 11e in an openable/closable manner with an unshown screw member or the like. Portions between the first lids 15 and the first case portion 11 are sealed with unshown sealing members each having a waterproof function.

In this embodiment, a second opening 11f having a circular shape is provided in a portion of the first case portion 11 corresponding to the first region R1, as shown in Fig. 3. This second opening 11f is covered with the second case portion 12 coupled with the first case portion 11. As shown in Figs. 3 and 5, a third opening 11g having a rectangular shape is provided in a portion of the first case portion 11 corresponding to the second region R2. This third opening 11g is covered with a platelike second lid 16 having a shape (rectangular shape) corresponding to the third opening 11g. The second lid 16 is attached to the portion of the first case portion 11 corresponding to the second region R2 in an openable/closable manner with an unshown screw member or the like. A portion between the second lid 16 and the first case portion 11 is sealed with an unshown sealing member having a waterproof function.

As shown in Figs. 3 and 9, a single hole 11i is provided in an end along arrow Y1, of the bottom surface portion 11h of the portion of the first case portion 11 corresponding to the second region R2 to allow the L-shaped three connecting terminal portions 67 to pass through the bottom surface portion 11h. As shown in Fig. 9, the three connecting terminal portions 67 passing through the hole 11i of the first case portion 11 are screwed on the three connecting terminal portions 63 mounted on the partition wall 14 and the three connecting terminal portions 66 of the inverter 1. Thus, the connecting terminal portions 62 of the motor 3 and the connecting terminal portions 66 of the inverter 1 are electrically connected to each other through the connecting terminal portions 63 and 67.

As shown in Figs. 3 and 5, a third region R3 where the controller 5 is arranged is provided on the side of the second lid 16 opposite to the first case portion 11 (along arrow Z1). The third region R3 is a recessed space surrounded by a wall portion 16a integrally formed on the second lid 16. Thus, the second lid 16 serves as a case portion to store the controller 5. The second lid 16 is an example of the "case portion" or the "third case portion".

As shown in Figs. 3 and 5, a fourth opening 16b having a rectangular shape smaller than the third opening 11g of the first case portion 11 is provided in a portion of the second lid 16 corresponding to the third region R3. This fourth opening 16b is covered with a platelike third lid 17 having a shape (rectangular shape) corresponding to the fourth opening 16b. The third lid 17 is attached to the portion of the second lid 16 corresponding to the third region R3 in an openable/closable manner with an unshown screw member or the like. A portion between the third lid 17 and the portion of the second lid 16 corresponding to the third region R3 is sealed with an unshown sealing member having a waterproof function.

As shown in Fig. 3, a single through-hole 16c is provided in a portion along arrow X1, of the wall portion 16a surrounding the third region R3 of the second lid 16 to allow a single connecting wire 72 (see Fig. 2) for connecting the controller 5 arranged in the third region R3 and the unshown controller of the entire vehicle 100 provided outside the motor driving portion 10 to each other to pass through the wall portion 16a. As shown in Figs. 3 and 9, a hole 16e is provided in an end along arrow Y1, of the bottom surface portion 16d of the portion of the second lid 16 corresponding to the third region R3 to allow unshown connecting wires, connecting terminal portions, etc. connected to the controller 5 to pass through the bottom surface portion 16d.

According to this embodiment, as hereinabove described, the first case portion 11 and the second case portion 12 storing the motor 3, the inverter 1, and the coil switching portion 4 are provided, and coupled with each other. Thus, the first case portion 11 and the second case portion 12 storing the motor 3, the inverter 1, and the coil switching portion 4 can be coupled with each other to be integrated. Consequently, formation of a dead space between each case portion storing the motor 3, the inverter 1, and the coil switching portion 4 can be suppressed. Furthermore, the coil switching portion 4 is arranged in a direction (along arrow Y1) along the rotating shaft 31 with respect to the motor 3 while the inverter 1 is arranged in the direction (along arrow Z1) orthogonal to the rotating shaft 31 with respect to the motor 3. Thus, the length of the motor driving portion 10 in the axial direction (direction Y) can be reduced as compared with a case where the motor 3, the coil switching portion 4, and the inverter 1 are linearly arranged in the axial direction. Consequently, the vehicle in which a space for the motor driving portion 10 can be saved can be provided. This effect is advantageous particularly in the vehicle 100 in which it is necessary to arrange a large number of members in a limited arrangement space.

According to this embodiment, connecting wires to electrically connect the motor 3, the coil switching portion 4, and the inverter 1 can be stored in the first case portion 11 and the second case portion 12 coupled with each other. Therefore, no space for placing the connecting wires to electrically connect the motor 3, the coil switching portion 4, and the inverter 1 may be provided separately outside the first case portion 11 and the second case portion 12. Thus, the space for the motor driving portion 10 can be further saved.

According to this embodiment, the connecting wires to electrically connect the motor 3, the coil switching portion 4, and the inverter 1 are stored in the first case portion 11 and the second case portion 12 coupled with each other. Thus, noise generated from the connecting wires due to switching operations (switching operations of the high speed coil switch SW1, the low speed coil switch SW2, and the switching elements Q1 to Q6) of the coil switching portion 4 and the inverter 1 can be shielded by the first case portion 11 and the second case portion 12 coupled with each other. Consequently, the noise generated due to the switching operations of the coil switching portion 4 and the inverter 1 can be inhibited from exerting bad influence on devices placed in the periphery of the motor driving portion 10 inside the vehicle 100.

According to this embodiment, as hereinabove described, the motor 3 and the inverter 1 are stored in the first case portion 11, and the coil switching portion 4 is stored in the second case portion 12. Thus, the motor 3, and the inverter 1 and the coil switching portion 4 are stored in the separate case portions (the first case portion 11 and the second case portion 12), so that the coil switching portion 4 can be separated from the motor 3 and the inverter 1 both relatively easily generating heat. Consequently, the coil switching portion 4 can be inhibited from being negatively influenced by the heat from the motor 3 and the inverter 1, and hence the coil switching portion 4 can be satisfactorily operated.

According to this embodiment, as hereinabove described, the water-cooling-type cooling tube 13 to cool the motor 3 and the inverter 1 is provided in the first case portion 11, and the air-cooling-type cooling fin 12e to cool the coil switching portion 4 is provided in the second case portion 12. Thus, the motor 3 and the inverter 1 both relatively easily generating heat can be cooled by the water-cooling-type cooling tube 13 having high cooling performance. The coil switching portion 4 relatively hardly generating heat can be cooled by the air-cooling-type cooling fin 12e having a simple structure. Consequently, the motor 3 and the inverter 1 both relatively easily generating heat can be effectively cooled while simplifying a cooling structure for the coil switching portion 4.

According to this embodiment, as hereinabove described, the cooling fin 12e is arranged on the side of the second case portion 12 opposite to the first case portion 11 (along arrow Y1). Thus, the cooling fin 12e is arranged in a position easily coming into contact with outside air, and hence the coil switching portion 4 can be further cooled by the cooling fin 12e.

According to this embodiment, as hereinabove described, the cooling fin 12e is arranged on the surface of the second case portion 12 opposite to the mounting surface 12d of the portion 12c in the form of a flat plate (along arrow Y1), and the coil switching portion 4 is mounted on the mounting surface 12d of the portion 12c in the form of a flat plate in the state in surface contact with the mounting surface 12d of the portion 12c in the form of a flat plate through the unshown thermally-conductive member such as grease having thermal conductivity. Thus, the heat generated from the coil switching portion 4 and transferred to the portion 12c in the form of a flat plate through the thermally-conductive member and the mounting surface 12d can be easily radiated to the opposite side (along arrow Y1) of the mounting surface 12d of the portion 12c in the form of a flat plate through the cooling fin 12e. Furthermore, the coil switching portion 4 and the mounting surface 12d are brought into surface contact with each other through the thermally-conductive member, so that the heat generated from the coil switching portion 4 can be easily transferred to the mounting surface 12d. Consequently, the cooling effect of the cooling fin 12e on the coil switching portion 4 can be further improved.

According to this embodiment, as hereinabove described, the coil switching portion 4 is cooled by the cooling fin 12e integrally provided on the outer surface of the second case portion 12. Thus, the number of components can be reduced, dissimilarly to a case where the coil switching portion 4 is cooled by cooling means provided separately from the second case portion 12.

According to this embodiment, as hereinabove described, the single cooling tube 13 is arranged to be held between the motor 3 and the inverter 1. Thus, the motor 3 and the inverter 1 (two heating elements) can be efficiently cooled by the single cooling tube 13.

According to this embodiment, as hereinabove described, the partition wall 14 extending in the directions (the direction X (horizontal direction) and the direction Z (vertical direction)) orthogonal to the rotating shaft 31 is arranged between the motor 3 stored in the first case portion 11 and the coil switching portion 4 stored in the second case portion 12. Thus, the partition wall 14 can inhibit the heat generated from the motor 3 from being directly transferred to the coil switching portion 4. Consequently, the coil switching portion 4 can be further inhibited from being negatively influenced by the heat from the motor 3, and hence the coil switching portion 4 can be more satisfactorily operated.

According to this embodiment, as hereinabove described, the concaves 14c are provided in the partition wall 14 to allow the connecting terminal portions 64 and 65 for electrically connecting the motor 3 and the coil switching portion 4 to each other to pass through the partition wall 14. Thus, the operation of connecting the motor 3 and the coil switching portion 4 to each other can be easily performed through the concaves 14c even if the partition wall 14 is arranged between the motor 3 and the coil switching portion 4.

According to this embodiment, as hereinabove described, the first openings 11e are provided in the portions (closer to the second case portion 12 (along arrow Y1) on both sides in the horizontal direction (direction X)) of the first case portion 11 corresponding to the connecting terminal portions 64 and 65, and the openable/closable first lids 15 covering the first openings 11e are provided. Thus, the operation of connecting the connecting terminal portions 64 and 65 to each other and maintenance thereof can be easily performed through the first openings 11e. Furthermore, entry of foreign matter through the first openings 11e can be suppressed by covering the first openings 11e with the first lids 15.

According to this embodiment, as hereinabove described, the first region R1 where the motor 3 is arranged is provided in the central portion of the first case portion 11 while the second region R2 where the inverter 1 is arranged is provided in the direction (along arrow Z1) orthogonal to the rotating shaft 31 with respect to the first region R1. Thus, the motor 3 and the inverter 1 are arranged in the first region R1 and the second region R2, respectively, so that the inverter 1 can be easily arranged in the direction (along arrow Z1) orthogonal to the rotating shaft 31 with respect to the motor 3.

According to this embodiment, as hereinabove described, the first case portion 11 includes the portion 11a in the form of a circular cylinder extending along the rotating shaft 31 of the motor 3, and the first region R1 is arranged on the inner surface side of the portion 11a in the form of a circular cylinder while the second region R2 is arranged on the outer surface side of the portion 11a in the form of a circular cylinder. Thus, the first region R1 can be easily provided in the central portion of the first case portion 11 by utilizing a region on the inner surface side of the portion 11a in the form of a circular cylinder, and the second region R2 can be easily provided in the direction (along arrow Z1) orthogonal to the rotating shaft 31 with respect to the first region R1 of the first case portion 11 by utilizing a region on the outer surface side of the portion 11a in the form of a circular cylinder.

According to this embodiment, as hereinabove described, the second opening 11f and the third opening 11g are provided in the portions of the first case portion 11 corresponding to the first region R1 and the second region R2, respectively. Thus, access to (work on) the motor 3 arranged in the first region R1 and the inverter 1 arranged in the second region R2 can be easily facilitated through the second opening 11f and the third opening 11g in assembling or during maintenance.

According to this embodiment, as hereinabove described, the second opening 11f is covered with the second case portion 12 in an openable/closable manner while the third opening 11g is covered with the second lid 16 in an openable/closable manner. Thus, entry of foreign matter through the second opening 11f and the third opening 11g can be suppressed by the second case portion 12 and the second lid 16.

According to this embodiment, as hereinabove described, the smoothing condenser 2 smoothing power input to the inverter 1 is arranged in the second region R2 where the inverter 1 is arranged. Thus, the smoothing condenser 2 and the inverter 1 can be arranged adjacent to each other, and hence the smoothing condenser 2 and the inverter 1 can be easily electrically connected to each other.

According to this embodiment, as hereinabove described, the controller 5 controlling the coil switching portion 4 and the inverter 1 is arranged in the third region R3 of the second lid 16 covering the third opening 11g of the first case portion 11. Thus, the number of components can be reduced, dissimilarly to a case where a dedicated case portion for storing the controller 5 is provided separately from the second lid 16.

According to this embodiment, as hereinabove described, the fourth opening 16b is provided in the portion of the second lid 16 corresponding to the third region R3 where the controller 5 is arranged, and the openable/closable third lid 17 covering the fourth opening 16b is provided. Thus, access to (work on) the controller 5 arranged in the third region R3 of the second lid 16 can be easily facilitated through the fourth opening 16b in assembling or during maintenance. Furthermore, entry of foreign matter through the fourth opening 16b can be suppressed by the third lid 17.

According to this embodiment, the high speed coil switch SW1 and the low speed coil switch SW2 of the coil switching portion 4 and the switching elements Q1 to Q6 of the inverter 1 each are made of the SiC semiconductor. Thus, the switching elements Q1 to Q6, the high speed coil switch SW1, and the low speed coil switch SW2 each are made of the SiC semiconductor having excellent heat resistance, so that the switching elements Q1 to Q6, the high speed coil switch SW1, and the low speed coil switch SW2 can be satisfactorily operated even if the inverter 1 and the coil switching portion 4 are arranged in the vicinity of a heating element (motor 3, for example).

It should be understood by those skilled in the art that various modifications, combinations, sub-combinations, and alterations may occur depending on design requirements and other factors insofar as they are within the scope of the appended claims or the equivalents thereof.

For example, in the aforementioned embodiment, the motor driving portion (motor driving device) is loaded in the vehicle. Nevertheless, the motor driving portion (motor driving device) may alternatively be loaded in a ship or the like other than the vehicle.

In the aforementioned embodiment, the motor and the inverter are stored in the single case portion (first case portion). Nevertheless, the motor and the inverter may alternatively be stored in separate case portions.

In the aforementioned embodiment, the motor and the inverter are water-cooled while the coil switching portion is air-cooled. Nevertheless, the motor and the inverter may alternatively be air-cooled, or the coil switching portion may alternatively be water-cooled. Furthermore, the motor, the inverter, and the coil switching portion may alternatively be cooled by cooling elements.

In the aforementianed embodiment, the coil switching portion is cooled by the cooling fin integrally provided on the second case portion, as an example of a case where the coil switching portion is air-cooled. Nevertheless, the coil switching portion may alternatively be cooled by a cooling fan provided separately from the second case portion.

In the aforementioned embodiment, the motor and the inverter are cooled by the same cooling channel (single cooling tube), as an example of a case where the motor and the inverter are water-cooled. Nevertheless, the motor and the inverter may alternatively be cooled by separate cooling tubes.

In the aforementioned embodiment, the concaves are provided in the partition wall arranged between the motor and the coil switching portion to allow the connecting terminal portions for electrically connecting the motor and the coil switching portion to each other to pass through the partition wall. Nevertheless, not the concaves but holes may alternatively be provided in the partition wall arranged between the motor and the coil switching portion.

In the aforementioned embodiment, the first openings employed to perform the operation of connecting the connecting terminal portions of the motor and the connecting terminal portions of the coil switching portion to each other are provided in the first case portion. Nevertheless, the first openings may alternatively be provided in the second case portion or in both the first case portion and the second case portion.

In the aforementioned embodiment, the motor and the inverter are arranged in the two regions (the first region and the second region) provided separately from each other on the inner surface side and the outer surface side of the portion in the form of a circular cylinder, respectively. Nevertheless, the motor and the inverter may alternatively be arranged in a single region formed inside a single case portion.

In the aforementioned embodiment, the first case portion includes the portion in the form of a circular cylinder, and the motor is arranged on the inner surface side of the portion in the form of a circular cylinder while the inverter is arranged on the outer surface side of the portion in the form of a circular cylinder. Nevertheless, the first case portion may alternatively include a portion in the form of a rectangular cylinder, and the motor may alternatively be arranged on the inner surface side of the portion in the form of a rectangular cylinder while the inverter may alternatively be arranged on the outer surface side of the portion in the form of a rectangular cylinder.

In the aforementioned embodiment, the smoothing condenser is arranged in the second region where the inverter is arranged. Nevertheless, the inverter and the smoothing condenser may alternatively be arranged in separate regions.

In the aforementioned embodiment, the case portion (third case portion) to store the controller is integrally provided on the second lid. Nevertheless, the case portion (third case portion) to store the controller may alternatively be provided separately from the second lid.

In the aforementioned embodiment, the switching elements of the inverter and the high speed coil switch and the low speed coil switch of the coil switching portion each are made of the SiC semiconductor. Nevertheless, the switching elements of the inverter and the high speed coil switch and the low speed coil switch of the coil switching portion each may alternatively be made of a Si semiconductor, for example, other than the SiC semiconductor, or constituted by switching elements other than the switching elements each containing a semiconductor.

In the aforementioned embodiment, the first case portion and the second case portion are fastened to each other with the screw members to be coupled with each other. Nevertheless, the first case portion and the second case portion may alternatively be fastened to each other with fastening members other than the screw members, such as caulking members to be coupled with each other, or may alternatively be bonded to each other with an adhesive, for example, without the fastening members to be coupled with each other.

## Claims

1. A motor driving device (10) comprising:
a motor (3) including a high speed drive coil (3a) and a low speed drive coil (3b);
a coil switching portion (4) switching connection states of the high speed drive coil and the low speed drive coil of the motor, arranged in a direction along a rotating shaft (31) of the motor with respect to the motor;
a power converter (1) connected to the motor, arranged in a direction intersecting with the rotating shaft with respect to the motor; and
a plurality of case portions (11, 12, 16) storing at least the motor, the coil switching portion, and the power converter, wherein
the plurality of case portions are coupled with each other.

2. The motor driving device according to claim 1, wherein
the plurality of case portions include:
a first case portion (11) storing at least the motor and the power converter, and
a second case portion (12) storing the coil switching portion.

3. The motor driving device according to claim 2, wherein
a first cooling portion (13) of water-cooling type is provided in the first case portion to cool the motor and the power converter, and
a second cooling portion (12e) of air-cooling type is provided on the second case portion to cool the coil switching portion.

4. The motor driving device according to claim 3, wherein
the second case portion includes a portion (12c) in the form of a flat plate serving as a mounting surface (12d) on which the coil switching portion is mounted,
the second cooling portion is arranged on a surface of the second case portion opposite to the mounting surface of the portion in the form of a flat plate, and
the coil switching portion is mounted on the mounting surface of the portion in the form of a flat plate in a state in surface contact with the mounting surface of the portion in the form of a flat plate through a thermally-conductive member.

5. The motor driving device according to claim 3 or 4, wherein
the second cooling portion includes a cooling fin (12e) integrally provided on an outer surface of the second case portion.

6. The motor driving device according to any one of claims 2 to 5, wherein
the first cooling portion is arranged to be held between the motor and the power converter.

7. The motor driving device according to any one of claims 2 to 6, further comprising a partition wall (14) arranged between the motor stored in the first case portion and the coil switching portion stored in the second case portion to extend in directions intersecting with the rotating shaft.

8. The motor driving device according to claim 7, wherein
a concave (14c) or a hole is provided in the partition wall to allow connecting terminal portions (64, 65) for electrically connecting the motor and the coil switching portion to each other to pass through the partition wall.

9. The motor driving device according to claim 8, wherein
a first opening (11e) is provided in a portion of at least either the first case portion or the second case portion corresponding to the connecting terminal portions,
the motor driving device further comprising an openable/closable first lid (15) covering the first opening.

10. The motor driving device according to any one of claims 2 to 9, wherein
the first case portion includes:
a first region (R1) where the motor is arranged, provided in a central portion of the first case portion, and
a second region (R2) where the power converter is arranged, provided in the direction intersecting with the rotating shaft with respect to the first region.

11. The motor driving device according to claim 10, wherein
the first case portion includes a cylindrical portion (11a) extending along the rotating shaft,
the first region is arranged on an inner surface side of the cylindrical portion, and
the second region is arranged on an outer surface side of the cylindrical portion.

12. The motor driving device according to claim 10 or 11, wherein
a second opening (11f) and a third opening (11g) are provided in portions of the first case portion corresponding to the first region and the second region, respectively.

13. The motor driving device according to claim 12, wherein
the second opening is covered with the second case portion in an openable/closable manner,
the motor driving device further comprising an openable/closable second lid (16) covering the third opening.

14. The motor driving device according to any one of claims 10 to 13, further comprising a smoothing condenser (2) smoothing power input to the power converter, wherein
the smoothing condenser is arranged in the second region of the first case portion, where the power converter is arranged.

15. The motor driving device according to any one of claims 10 to 14, further comprising a controller (5) controlling the coil switching portion and the power converter, wherein
the plurality of case portions further include a third case portion (16) to store the controller, adjacently arranged outside the second region of the first case portion in the direction intersecting with the rotating shaft.

16. The motor driving device according to claim 15, wherein
a third opening (11g) is provided in a portion of the first case portion corresponding to the second region,
the motor driving device further comprising an openable/closable second lid (16) covering the third opening, wherein
the third case portion is integrally provided on the second lid.

17. The motor driving device according to claim 15 or 16, wherein
the third case portion includes a third region (R3) where the controller is arranged, and
a fourth opening (16b) is provided in a portion of the third case portion corresponding to the third region, the motor driving device further comprising an openable/closable third lid (17) covering the fourth opening.

18. The motor driving device according to any one of claims 1 to 17, loaded in a vehicle (100).
